# EUROPEAN PATENT SPECIFICATION

(11) **EP 0 965 566 B1**
(45) Date of publication and mention of the grant of the patent: **02.08.2006**
(21) Application number: 98308780.0
(22) Date of filing: 27.10.1998
(51) Int. Cl.: C02F 11/02, C02F 3/12, C02F 3/30

(54) **A method for treating organic waste water**
Verfahren zur Behandlung von organischem Abwasser
Procédé de traitement d eaux usées organiques

(30) Priority: 15.06.1998 JP 16721298
(43) Date of publication of application: 22.12.1999
(73) Proprietor: KOBELCO ECO-SOLUTIONS CO., LTD., Kobe-shi, Hyogo 651-0072 (JP)
(72) Inventor: Hasegawa, Susumu, Kobe-shi, Hyogo 651-2242 (JP); Akashi, Akira, Kobe-shi, Hyogo 655-0043 (JP)
(74) Representative: Pett, Christopher Phineas

(56) References cited:
- WO-A-91/17959
- DE-A- 1 642 404
- DE-A- 3 826 147
- DE-A- 3 833 039
- DE-A- 4 331 927
- DE-A- 19 523 263
- US-A- 4 042 493
- US-A- 4 183 808
- US-A- 4 460 470
- US-A- 4 915 840
- US-A- 4 956 094

## Description

The present invention relates to a novel method for treating organic waste water discharged from sewage treatment processes of sewage treatment plants, night soil treatment plants, as well as from processes for the treatment of organic effluents from food factories, chemical factories or the like, and to separating and recovering phosphorous components contained in the waste water.

With regard to the method for treating organic waste water as mentioned above, there has extensively been used a method, wherein a biomass sludge predominantly containing microbial cells as well as excess sludge containing untreated residual sludge are subjected to a solid-liquid separation using a precipitation tank or the like. These sludges have been produced by the biological digestion of the waste water. In this method, while the resulting liquid portion obtained as a supernatant from such a separation process is appropriately discarded, the excess sludge portion is disposed of into the sea or employed for land-fill.

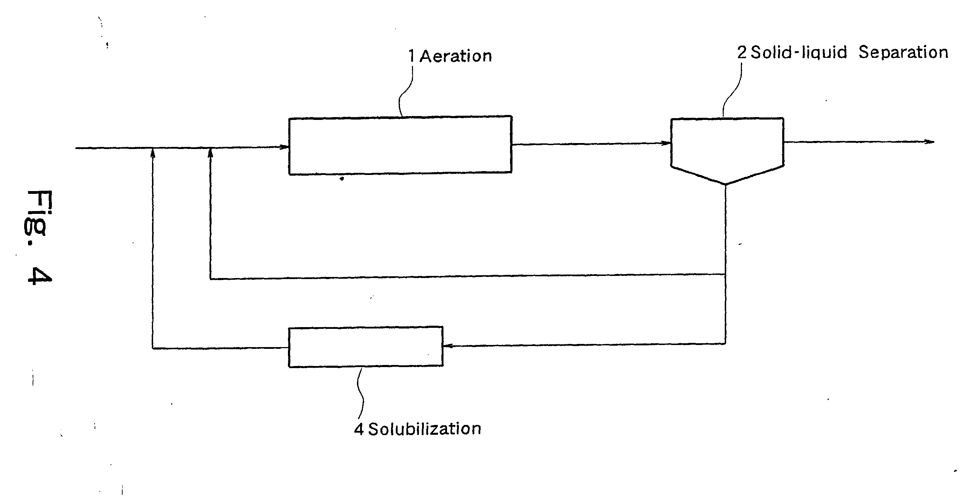

The applicant has filed a patent application related to a method and an apparatus for treating an activated sludge, "comprising the steps of: i) subjecting an organic waste water to an aeration treatment in an aeration device; ii)solid-liquid separation into a treated liquid and a sludge; iii) returning a portion of the separated sludge to the aeration device through a recycle route; iv) heat-exchanging the excess sludge obtained from the solid-liquid separation step using a heat exchanger; v) solubilizing the heated sludge at a high temperature in a solubilization device; and vi) returning the solubilized solution to the aeration device through a return route" (see, Japanese Laid-Open Patent Publication No. 9-10791). This patent application discloses an invention directed to a method and an apparatus for treating an activated sludge, capable of reducing the quantity of the excess sludge produced. A schematic flow diagram for this method is shown in Fig. 4.

However, depending on the raw organic effluent to be treated, a large amount of phosphorous components (i.e. orthophosphoric acids, polyphosphoric acids, phosphate salts and their esters, phosphoproteins, glycerophosphoric acids, phospholipids and the like) could remain in the treated liquid and the excess sludge by the method described above. It is considered that to discard these substances outside may directly result in environmental pollution. In particular, it is unfavorable to discharge the treated liquid containing a large amount of such phosphorous components into lakes or ponds, since it causes drastic growth of phytoplanktons associated with eutrophication of the water. Therefore, a procedure is sometimes adopted, which comprises adding a flocculant into the treated liquid obtained from the solid-liquid separation device in order to reduce the content of the phosphorous components, followed by discharging the treated liquid. However, this method could be disadvantageous because subjecting a large amount of the treated liquid to such a flocculation process would require a large scale device, thereby causing increases in cost, time, labour and the like which are necessary for practising this method. Furthermore, the flocculation efficiency is not very high, and removal of the phosphorous components may sometimes be insufficient. Therefore, it does not help discarding the excess sludge without removing sufficiently the phosphorous components contained in the sludge at present.

Meanwhile, conventional processes for removing phosphorous components in a waste water, include: [1] a chemical flocculation method; [2] a crystallization dephosphorous method; and [3] an anaerobic -aerobic activated sludge method, etc. (see, Sewage Service Project, Design Guide and Review, published by Japan Sewage Work Association, Vol. 2, pp.131-136, 1994).

In the chemical flocculation method, flocculants such as aluminum sulfate are mixed with waste water to precipitate flocs of insoluble phosphate salts (including the floc of microorganisms). This is based on the phenomenon that trivalent metal cations such as aluminum ions, ferric ions, etc, chemically react with orthophosphoric ion to form insoluble phosphate salts. According to this method, an increase in excess sludge by 5 to 20% has been reported. Therefore, in view of the preservation of the environment, it is not preferable to dispose of a large amount of the excess sludge containing a large amount of the phosphorous components.

The crystallization method is based on the production of insoluble hydroxyapatite by a reaction between an orthophosphoric ion and a calcium ion. This method is preferred to the extent that an increase in excess sludge does not occur. However, it is necessary to control the conditions required for crystallization of apatite restrictedly (e.g. removal of crystallization inhibitors such as carbonic ions, and pH adjustment, temperature adjustment, as pre-treatments) in this method. Therefore, the applicability thereof is limited. Furthermore, since this method includes factors, which cause an increase in cost, it is not preferable as a means applied to waste water treatment.

In the anaerobic -aerobic activated sludge method, an effluent is subjected to a repeated treatment in an anaerobic tank, an aerobic tank and a precipitation tank. Thus, the phosphorous components could be included in the excess sludge, and thereby the phosphorous components in the treated liquid could be reduced. This method is based on the phenomenon that microorganisms release polyphosphoric acid in the form of orthophosphoric acid in the anaerobic state although they ingest and metabolize an excess amount of orthophosphoric acid in the aerobic state in order to accumulate orthophosphoric acid as polyphosphoric acid. According to this method, although the phosphorous components can be effectively removed from the treated liquid, the excess sludge is rich in the phosphorous components and also contains other various organic components and heavy metal components. Therefore, to discard such an excess sludge would raise problems. Furthermore, despite the possibility of effectively using the phosphorous components which were contained in the waste water, e.g., in the production of fertilizers, phosphorous compounds and the like, it does not prevent the discarding of phosphorous components in the form of a sludge mixed with such heterogeneous components.

It is an object of the present invention to provide a method for treating organic waste water. Through the use of this method, it is possible to separate and recover phosphorous components as a liquid or in solid form in a reduced volume, thereby the reuse of the phosphorous components can be realized and the disadvantages resulting from discarding the phosphorous components which are contained in a large amount of a primary treated liquid can be avoided.
Fig. 1 is a schematic diagram showing a method for treating, organic waste water not falling within the present invention.
Fig. 2 is a schematic diagram showing an embodiment of the method for treating organic waste water of the present invention.
Fig. 3 is a schematic diagram showing the other embodiment of the method for treating organic waste water of the present invention.
Fig. 4 is a schematic diagram showing a conventional method for treating organic waste water.

As the first aspect of the present invention, a novel method for treating organic waste water is provided, which comprises:
(1) an aeration step for aerobically treating a waste water;
(2) a solid-liquid separation step for separating the waste water after the aeration step into a primary treated liquid and a primary sludge; and
(3) a phosphorous component release step for releasing phosphorous components from the separated primary sludge to a liquid phase; and a second solid-liquid separation step for separating the primary sludge into a secondary treated liquid containing the released phosphorous components and a secondary sludge free from phosphorous components.

According to this method, the phosphorous components are incorporated and accumulated into microorganisms in step (1). Then the treated liquid from step (1) is separated in the following step (2), into the primary treated liquid and the primary sludge containing high concentration of phosphorous components. In the following step (3), the phosphorous components are released from the primary sludge into a liquid phase, followed by the second solid-liquid separation. As a result, a small volume of the treated liquid containing a high concentration of phosphorous components (the secondary treated liquid) and the secondary sludge without the phosphorous components can be obtained.

The method according to the above-described method further comprises a solubilization step (4) for solubilizing the secondary sludge following the step (3). Thus, a further reduction in the amount of the excess sludge can be achieved.

In the method according to the above-described method the solution resulting from the solubilization step (4) is returned to the aeration step (1) to be treated in a circulation system. Therefore, a significant reduction in the volume of the excess sludge can be realized, and production of the excess sludge may be close to zero, depending on the conditions employed.

In the method according to the above-described method at least a portion of the secondary sludge obtained from step (3) is returned to the aeration step (1). In this method, since the amount of the sludge which is subjected to the phosphorous component release step in step (3) can be adjusted regardless of the amount of the solution resulting from the solubilization step (4), it becomes possible to further increase the amount of the phosphorous components released from the sludge. Therefore, the biological degradation of the sludge and the accumulation of the phosphorous components by the microorganism by the aeration step (1) can be accomplished more completely.

As the second aspect of the present invention, the method according to the above-described method in connection with the first aspect of the invention is provided, wherein both the phosphorous component release and the second solid-liquid separation described in the step (3) are carried out in a single vessel. In accordance with this second aspect of the present invention, the scale of the apparatus may be diminished, as well as the simplified steps can be utilized.

As the third aspect of the present invention, the method according to the above-described method in connection with any of the above aspects of the invention is provided, further comprising a phosphorous component separation step (5). According to this method, the phosphorous components contained in the secondary treated liquid obtained from step (3) are easily concentrated and recovered in step (5). In step (5), for example, a flocculant is added to the secondary treated liquid phase, followed by precipitation and separation in order to recover the phosphorous components. The phosphorous components recovered can be readily utilized for producing fertilizers and phosphorous chemicals, and is advantageous for handling during transport.

As the fourth aspect of the present invention, the method according to the above-described method in connection with any of the above aspects of the invention is provided, further comprising an anaerobic treatment step (6) prior to the aeration step (1). In this method, anaerobic degradation of the sludge with the release of the phosphorous components to a liquid phase is carried out prior to an excessive incorporation of the phosphorous components into the microorganisms. Thereafter, the phosphorous components are incorporated more efficiently into the microorganisms in the aeration step (1).

The fifth aspect of the present invention is to provide the method according to the above-described method in connection with any of the above aspects of the invention, wherein the phosphorous component release in step (3) is carried out by exposing the primary sludge to an anaerobic condition. According to this method, release of the phosphorous components can be suitably accomplished with a high efficiency, which is advantageous in the facility of the treatment after the whole process.

An apparatus for treating organic waste water according to the above-described method in connection with any of the above aspects of the invention is provided. The apparatus comprises an aeration tank, a solid-liquid separation device, a phosphorous component release device, a solid-liquid separation device, and routes for transporting liquids and /or sludges connected with each tank. The scale of the whole apparatus required for removing the phosphorous components can be comparatively reduced. Furthermore, the phosphorous components can be obtained in a concentrated form after the complete treatment, which enables the reuse of the recovered phosphorous components.

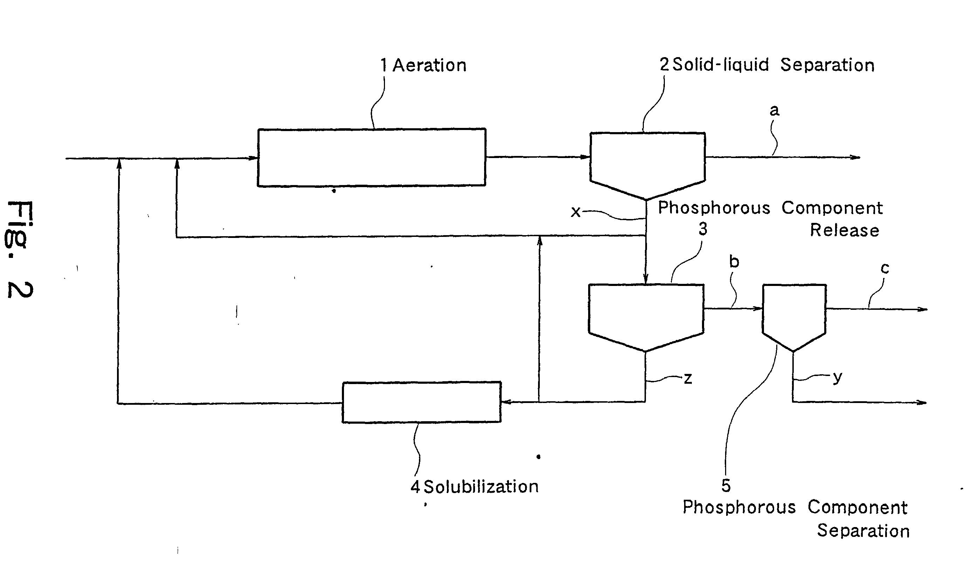

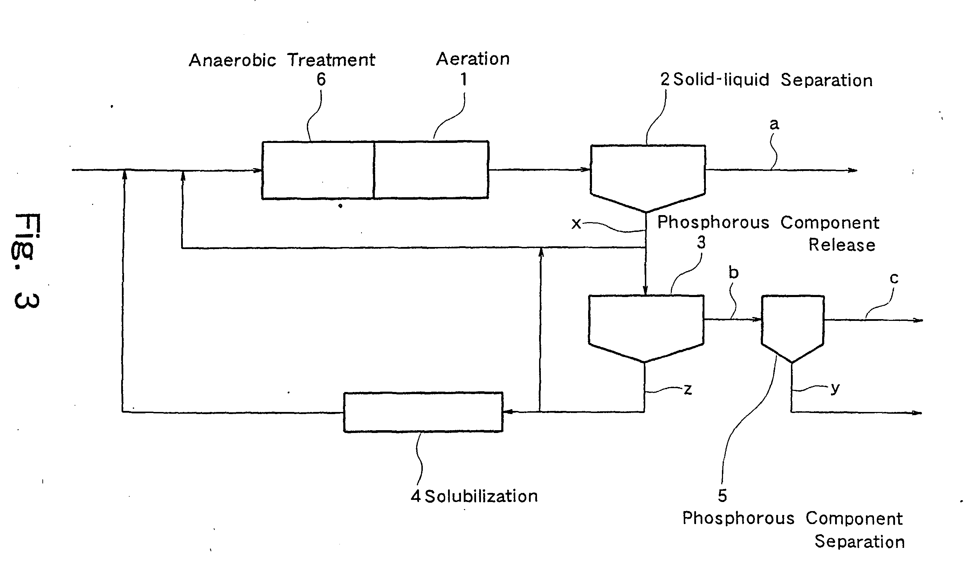

The preferred embodiment for carrying out the present invention is described below in more detail. Non-limiting preferred embodiments relating to the methods of the present invention are schematically shown in the flow sheets of Figs. 2 and 3.

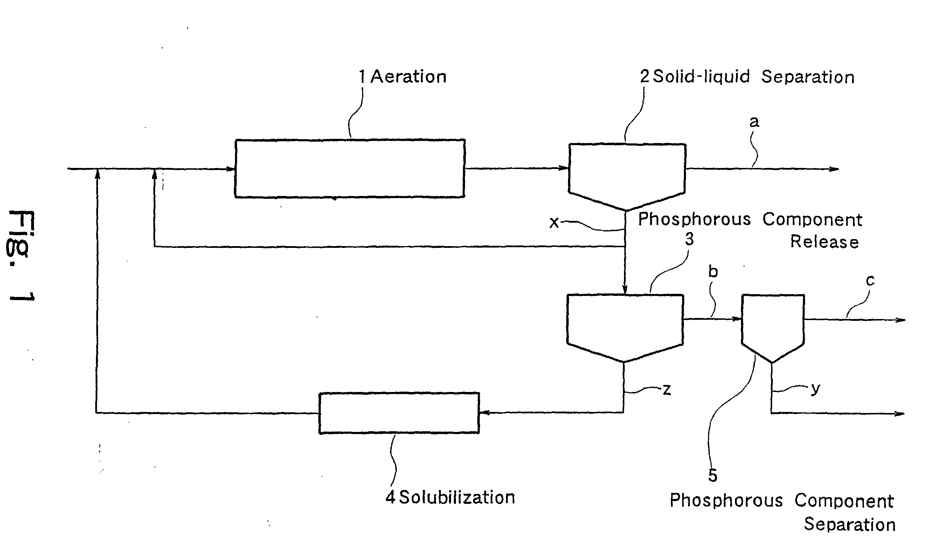

In the process shown in Fig. 1, raw waste water is initially subjected to aeration step 1, in which aerobic microbial digestion and ingestion of the phosphorous components (namely, internal accumulation) by microorganisms can occur. Then, the mixture resulting from aeration step 1 is subjected to a solid-liquid separation step 2 in order to be separated into the primary sludge (x) containing a high concentration of the phosphorous components and the primary treated liquid (a). For the purpose of releasing the phosphorous components from the microorganisms in the primary sludge (x), the following step 3 for the phosphorous component release as well as for the solid-liquid separation is conducted. The phosphorous components may be released into a liquid phase, which is followed by the separation into a small volume of the treated liquid containing a large amount of the phosphorous components (designated as secondary treated liquid (b)) and the secondary sludge (z). The volume of the resulting secondary treated liquid (b) in this process is remarkably reduced as compared with the phosphorous effluent obtained by the conventional treatment method. Consequently, the scale of the device for the following phosphorous component separation step 5 may be fairly small. In step 5, for example, by addition of a flocculant into the secondary treated liquid (b), the phosphorous components may be recovered as a solid component. Then the tertiary treated liquid (c) containing substantially no phosphorous component, and the solid phosphorous component (y) are obtained by solid-liquid separation. While the solid phosphorous component (y) is separated from the sludge, the volume of the solid component (y) is greatly reduced with almost no other components derived from the raw waste water. Therefore, the solid phosphorous component can be readily utilized as a raw material for the production of fertilizers or phosphorous chemicals. The secondary sludge (z) is subjected to solubilization step 4 to reduce the volume of the sludge. Subsequently, the solution resulting from solubilization is returned to aeration step 1 and subjected to a circulation system so that enough microbial digestion as well as efficient concentration and recovery of the phosphorous components are carried out.

The embodiment of the present invention shown in Fig. 2 comprises a route for returning a portion of the secondary sludge (z) resulting from the phosphorous component release step in addition to the embodiment shown in Fig. 1, into aeration step 1. In this embodiment, it is intended that further enhancement of the microbial digestion, the microbial internal accumulation of the phosphorous components and the following release of the phosphorous components can be achieved.

The other preferred embodiment of the present invention is shown in Fig. 3, wherein an anaerobic treatment step 6 is added prior to the aerobic treatment step 1 in the process shown in Fig. 2. In the step 6, anaerobic digestion and release of phosphorous components from microorganisms contained in the raw waste water, returned sludges (x and z) and the solution from the solubilization step 4, occur simultaneously. Thus, aerobic digestion and accumulation of the phosphorous components into microorganisms in the aeration step 1 can be promoted.

In the above-illustrated invention, the structure of tanks for each treatment in the aeration step 1, solid-liquid separation step 2 and solubilization step 4, as well as routes for connecting those tanks are not particularly limited. Therefore, those which have conventionally been employed, can be utilized for the present apparatus. Particularly, in the apparatus of the present invention, the tank for the aeration treatment 1 may be preferably equipped with an aeration device, while a tank for the anaerobic treatment step 6 described below may be preferably equipped with a stirring device. Furthermore, the respective conditions in these steps may be set according to the conventional means of the aerobic process, solid-liquid separation process and solubilization process (see, Japanese Laid-Open Patent Publication No. 9-10791).

Briefly, aerobic digestion in step 1 may be carried out at a room temperature with an aeration rate of 0.1 to 0.3 (volume/volume/min.). In the solid-liquid separation step 2, for example, precipitation, centrifugation and filtration (including membrane separation) can be utilized. Among these, precipitation or centrifugation is preferable because expensive devices and/or special care may not be required. If separation by precipitation in the precipitation tank can be easily carried out, precipitation is most suitable as a separation means. In step 4, solubilization may be carried out at 50 to 90°C, preferably 60 to 70°C under ambient pressure, and preferably at neutral or weakly basic conditions of pH. The solubilization may be carried out either anaerobically or aerobically. Each step of the method of the present invention may be carried out in any form of batch or continuous system. The time required for the treatment may be appropriately determined in view of the physical properties of waste water as well as the scale and the scale of each tank employed.

In the phosphorous component release step described above, it is particularly preferred that the phosphorous components may be released from the microorganisms in the primary sludge (x), by exposing the sludge to anaerobic conditions. This process is constructed based on the following phenomenon. Orthophosphoric acid can be ingested by microorganisms under aerobic conditions (in the aeration step), whereas accumulated orthophosphoric acid in the form of granules of polyphosphoric acid in microbial cells can be hydrolyzed and again released as orthophosphoric acid into a liquid phase under anaerobic conditions. Therefore, this process makes it possible to release the phosphorous components with high efficiency and has the advantages of simple treatment of the components after completion of the process.

When an anaerobic treatment is carried out such as the phosphorous component release step, the temperature of the treatment is not particularly limited, and may be set at an ambient temperature. Furthermore, a phosphorous component release tank is preferably equipped with a stirring device so that the phosphorous component release may not be inhibited by the existing phosphorous components surrounding the microorganisms.

In addition to the anaerobic treatment described above, it is possible to release the phosphorous components accumulated in the microorganisms into a liquid phase by using ultrasonic destruction, ozone degradation, cell destruction by a heat alkali treatment, etc. Therefore, a convenient method may be appropriately selected depending on the species of the microorganism contained in the waste water.

The solid-liquid separation after the release of the phosphorous components in step 3 may be carried out in a similar way of the separation step 2 as described above.

In step 3, the phosphorous component release and the solid-liquid separation are preferably carried out simultaneously in a single vessel. In this case, precipitation is suitable for the solid-liquid separation.

With respect to the phosphorous component separation step 5, chemical flocculation methods or crystallization dephosphorous methods have conventionally been employed. Particularly, the chemical flocculation method, which comprises the addition of flocculant and precipitation separation, is preferred. In more detail, flocculate precipitation may be carried out by adding a flocculant such as polyaluminum chloride, aluminum sulfate, ferric chloride or ferrous sulfate to the secondary treated liquid (b), stirring the mixture, precipitating the resulting phosphorous components, and then recovering the phosphorous components as a solid form. Prior to the addition of a flocculant, the content of total phosphorous components contained in the treated liquid (b) may be determined (see Examples regarding determination method of the total phosphorous content). Then, from the determined content of total phosphorous components, the mole number in terms of orthophosphoric acid may be estimated. The amount of the flocculant to be added may be preferably equivalent to the moles of those obtained above.

The phosphorous components are finally recovered as the secondary treated liquid (b) or the solid phosphorous component (y) which is highly concentrated and considerably purified. Therefore, it can be readily utilized as the raw material for the production of fertilizers or phosphorous chemicals as discussed above.

### Examples

While examples of the present invention are described below, the scope of the present invention should not be limited thereto.

### Comparative Example 1

According to the process shown in Fig. 1, the waste water from a food factory was subjected to the treatment. An aeration tank (a square-shaped vessel made of transparent vinyl chloride with an internal volume of 40 L) was charged with the waste water having 3,000 mg/L of the concentration of mixed liquid suspension solid (MLSS) at the flow rate of 20 L/day and maintained at an aeration volume of 0.3 vvm at room temperature (25°C). The following solid-liquid separation was carried out using a square-shaped precipitation vessel made of transparent vinyl chloride which has an internal volume of 10 L. The mixture from the aeration step was charged with 3,000 mg/L of MLSS concentration, then separated into a primary sludge and a primary treated liquid. The volume of the primary sludge discharged from this separation was 18.84 L per day. The resulting primary sludge was then subjected to an anaerobic treatment with 6,000 mg/L of MLSS concentration at a constant volume of 2.9 L/day, at 25°C with stirring at 60 rpm in a phosphorous component release tank (square-shaped vessel made of transparent vinyl chloride with an internal volume of 10 L). A portion of the primary sludge, which was not subjected to phosphorous component release step, was returned to the aeration tank to maintain the loading amount of the phosphorous component release tank. A secondary sludge obtained by precipitation separation after the anaerobic treatment was transferred to a solubilization tank (cylindrical vessel made of glass with an internal volume of 2 L) with the MLSS concentration of 10,000 g/mL in order to solubilize at 1.74 L/day, at 65°C with aeration volume of 0.5 vvm. According to this treatment, the sludge was solubilized in the amount of 5.8 g/day. On the other hand, a secondary treated liquid containing the phosphorous components after the anaerobic treatment and precipitation was subjected to flocculate precipitation at 1.16 L per day. In a flocculate precipitation tank (square-shaped vessel with an internal volume of 2 L), the equivalent mole of polyaluminum chloride to that in terms of orthophosphoric acid, which was converted from the content of total phosphorous in the secondary treated liquid, was added. Total phosphorous content was determined by the method described below. After flocculating the phosphorous components, the solid-liquid separation was carried out to obtain a tertiary treated liquid substantially containing no phosphorous component (1.16 L per day) and a solid phosphorous component. The whole process was continuously performed for 100 days in a circulation system.

### Example 1

The treatment process shown in Fig. 3 was also performed in a similar system to that of Example 1, except that the treatment in an anaerobic tank (square-shaped vessel made of transparent vinyl chloride with an internal volume of 20 L) as well as an aeration tank (internal volume of 20 L, the same as that of an anaerobic tank) was carried out instead of the treatment in the above 40 L aeration tank. The treatment in the anaerobic tank was carried out at 25°C with stirring at 60 rpm. The other condition including the discharged rate of the effluent or the sludge was identical to that in the Comparative Example 1.

### Comparative Example 2

According to the process shown in Fig. 4, a comparative experiment including aeration, solid-liquid separation and solubilization, was carried out as essentially identical with those in comparative Example 1, except that the phosphorous component release step was omitted. In this comparative example, a primary treated liquid from the solid-liquid separation step was obtained in the volume of 20 L per day.

### Estimation Tests

Water quality tests of each primary treated liquid obtained from each of the above examples were conducted with respect to the following items. The results of the tests are summarized in Table 1 below.
[1] BOD (determination of biological oxygen consumption): based on a dissolved oxygen amount which was consumed after a diluted solution was added and allowed to stand for 5 days at 20°C in accordance with JIS K 0102.
[2] COD_{Mn} (determination of chemical oxygen consumption): based on an oxygen consumption amount by addition of potassium permanganate at 100°C in accordance with JIS K 0102.
[3] T-P (determination of the total amount of phosphorous): based on a peroxo potassium disulfide decomposition method in accordance with JIS K 0102.
[4] PO₄³⁻-P (determination of an amount of phosphate ion): based on a molybdenum blue (ascorbic acid reduction) absorption method in accordance with JIS K 0102.

**Table 1**

| | BODₛ mg/L | COD_{Mn} mg/L | T-P mg/L | PO₄³⁻-P mg/L |
|---|---|---|---|---|
| Raw waste water | 320 | 257 | 10.9 | 8.5 |
| Comparative Example 2 | 15.5 | 30.0 | 8.9 | 9.2 |
| Comparative Example 1 | 11.0 | 28.5 | 6.2 | 5.5 |
| Example 1 | 13.8 | 31.0 | 2.5 | 0.7 |

As shown in Table 1, the total contents of both phosphorous and phosphate ion in the primary treated liquid of Example 1 and comparative Example 1 were significantly reduced as compared with that of the Comparative Example 2. Consequently, water quality was improved according to the method of the present invention. In particular, from the result of Example 1, wherein the anaerobic treatment step was additionally carried out, removal of the phosphorous components was sufficiently achieved. Therefore, it was concluded that phosphorous components can be recovered in a solid form while the quality of the primary treated liquid was improved according to the method of the present invention.

Moreover, the flow rate of the influent into the flocculate precipitation step was 20 L per day in the conventional method, whereas, the corresponding flow rate in the method of the present invention was 1.16 L per day. Accordingly, it was found that the scale of a device required for phosphorous component separation step can be remarkably diminished.

Consequently, there can be exerted such an effect that phosphorous components are separated and recovered in a small volume of liquid or solid form, according to the present invention. Therefore, reuse of the phosphorous components and reduction of the phosphorous components contained both in a large amount of a primary treated liquid and in an excess sludge to be discharged outside can be facilitated.

Furthermore, the production of the excess sludge in the present method is reduced, in which hardly any phosphorous components are present. Accordingly, any potential adverse influence on the environment associated with discarding the excess sludge is diminished.

## Claims

1. A method for treating organic waste water comprising:
(1) an aeration step for aerobically treating a waste water;
(2) a solid-liquid separation step for separating the waste water after the aeration into a primary treated liquid and a primary sludge; and
(3) a phosphorous component release step for releasing phosphorous components from the separated primary sludge to a liquid phase; and a second solid-liquid separation step for separating the primary sludge into a secondary treated liquid containing the released phosphorous components and a secondary sludge free from phosphorous components; and
(4) a solubilization step for solubilizing the secondary sludge after the step (3) ; and
wherein the solution resulting from the solubilization step (4) is returned to the aeration step (1) to be treated in a circulation system; and
wherein at least a portion of the secondary sludge obtained from the step (3) is returned to the aeration step (1).

2. A method according to claim 1, wherein both the phosphorous component release and the second solid-liquid separation described in the step (3) are carried out in a single vessel.

3. A method according to claim 1 or claim 2, further comprising a phosphorous component separation step (5), wherein the phosphorous components contained in the secondary treated liquid obtained in step (3) are concentrated and recovered.

4. A method according to any one of claims 1 to 3, further comprising an anaerobic treatment step (6) prior to the aeration step (1).

5. A method according to any one of claims 1 to 4, wherein the phosphorous component release step in the step (3) is carried out by exposing the primary sludge to anaerobic conditions.

## Patentansprüche

1. Verfahren zur Behandlung von organischem Abwasser, umfassend:
(1) einen Belüftungsschritt zur aeroben Behandlung eines Abwassers;
(2) einen Fest-Flüssig-Trennschritt zur Abtrennung des Abwassers nach der Belüftung in eine primär behandelte Flüssigkeit und einen Primärschlamm; und
(3) einen Freisetzungsschritt einer Phosphorkomponente zur Freisetzung von Phosphorkomponenten aus dem abgetrennten Primärschlamm in eine Flüssigphase; und einen zweiten Fest-Flüssig-Trennschritt zur Abtrennung des Primärschlamms in eine sekundär behandelte Flüssigkeit, die die freigesetzten Phosphorkomponenten und einen sekundär behandelten Schlamm enthält, der frei von Phosphorkomponenten ist; und
(4) einen Solubilisationsschritt zum Solubilisieren des Sekundärschlamms nach Schritt (3); und
wobei die Lösung, die sich aus dem Solubilisationsschritt (4) ergibt, zu dem Belüftungsschritt (1) zurückgeführt wird, um in einem Kreislaufsystem behandelt zu werden; und wobei mindestens ein Teil des Sekundärschlamms, der aus Schritt (3) erhalten wurde, zu dem Belüftungsschritt (1) zurückgeführt wird.

2. Verfahren nach Anspruch 1, wobei sowohl die Freisetzung der Phosphorkomponente als auch die zweite in Schritt (3) beschriebene Fest-Flüssig-Trennung in einem einzelnen Gefäß durchgeführt werden.

3. Verfahren nach Anspruch 1 oder 2, weiterhin umfassend einen Abtrennschritt (5) der Phosphorkomponente, wobei die Phosphorkomponenten, die in der sekundär behandelten, in Schritt (3) erhaltenen Flüssigkeit enthalten sind, konzentriert und gewonnen werden.

4. Verfahren nach einem der Ansprüche 1 bis 3, weiterhin umfassend einen anaeroben Behandlungsschritt (6) vor dem Belüftungsschritt (1).

5. Verfahren nach einem der Ansprüche 1 bis 4, wobei der Freisetzungsschritt der Phosphorkomponente in Schritt (3) durch Behandeln des Primärschlamms bei anaeroben Bedingungen ausgeführt wird.

## Revendications

1. Procédé de traitement d'une eau usée organique comprenant :
(1) une étape d'aération pour le traitement de manière aérobie d'une eau usée ;
(2) une étape de séparation solide-liquide pour séparer l'eau usée après l'aération en un liquide primaire traité et une boue primaire ; et
(3) une étape d'élimination d'un composant phosphoreux pour éliminer les composants phosphoreux de la boue primaire séparée à une phase liquide ; et une deuxième étape de séparation solide-liquide pour séparer la boue primaire en un liquide secondaire traité contenant les composants phosphoreux éliminés et une boue secondaire n'ayant pas de composants phosphoreux ; et
(4) une étape de solubilisation pour solubiliser la boue secondaire après l'étape (3) ; et
dans lequel la solution qui résulte de l'étape de solubilisation (4) est renvoyée à l'étape d'aération (1) pour être traitée dans un système de circulation ; et dans lequel au moins une partie de la boue secondaire obtenue à l'étape (3) est renvoyée à l'étape d'aération (1).

2. Procédé selon la revendication 1, dans lequel aussi bien l'élimination du composant phosphoreux et la deuxième séparation solide-liquide décrites à l'étape (3) sont réalisées dans un récipient unique.

3. Procédé selon la revendication 1 ou la revendication 2, comprenant en outre une étape (5) de séparation d'un composant phosphoreux, dans lequel les composants phosphoreux contenus dans le liquide secondaire traité obtenu à l'étape (3) sont concentrés et récupérés.

4. Procédé selon l'une quelconque des revendications 1 à 3, comprenant en outre une étape (6) de traitement anaérobie avant l'étape d'aération (1).

5. Procédé selon l'une quelconque des revendications 1 à 4, dans lequel l'étape d'élimination du composant phosphoreux de l'étape (3) est réalisée en exposant la boue primaire à des conditions anaérobies.
